Europäisches Patentamt

European Patent Office

Office européen des brevets

(11) Publication number: **0 161 087 B1**

(12) **EUROPEAN PATENT SPECIFICATION**

(45) Date of publication of patent specification: **15.03.89**

(51) Int. Cl.⁴: **B 60 S 1/54**

(21) Application number: **85302839.7**

(22) Date of filing: **23.04.85**

(54) **A windshield defroster assembly.**

(30) Priority: **03.05.84 JP 65675/84 u**
**14.05.84 JP 70210/84 u**
**12.07.84 JP 145048/84**

(43) Date of publication of application:
**13.11.85 Bulletin 85/46**

(45) Publication of the grant of the patent:
**15.03.89 Bulletin 89/11**

(84) Designated Contracting States:
**DE FR GB**

(56) References cited:
**DE-A-2 847 678**
**GB-A-2 081 883**
**JP-U-51 082 236**
**US-A-4 105 246**

**PATENTS ABSTRACTS OF JAPAN, vol. 8, no.
227 (M-332)1664r, 18th October 1984; & JP-A-
59 109 419 (NISSAN JIDOSHA K.K.) 25-06-1984**

(73) Proprietor: **TOYOTA JIDOSHA KABUSHIKI
KAISHA
1, Toyota-cho Toyota-shi
Aichi-ken 471 (JP)**

(72) Inventor: **Sasaki, Toshihiro
45-57, Tendou Shigo-cho
Toyota-shi Aichi-ken (JP)**
Inventor: **Nakagawa, Yasushi
1-chome, 20-5 Mitake
Tougo-cho Aichi-gun Aichi-ken (JP)**
Inventor: **Miyadera, Kazuhiko
4-chome, 48 Heiwa-cho Heiwa-Apartment
Room No. 111 Toyota-shi Aichi-ken (JP)**
Inventor: **Hirota, Toyokazu
9-chome, 132 Obayashi-cho, Dai 3 Obayashi-Ryo
Room No. 4206 Toyota-shi Aichi-ken (JP)**

(74) Representative: **Ben-Nathan, Laurence Albert
et al
Urquhart-Dykes & Lord 91 Wimpole Street
London W1M 8AH (GB)**

Courier Press, Leamington Spa, England.

## Description

The present invention relates to a windshield defroster for a vehicle, and more particularly to improvements in a screen for preventing an object from dropping into a defroster duct through a defroster outlet formed in a top surface of a dashboard of the vehicle.

European Patent Application No. 85302840.5 (filed on April 23rd, 1985, under the same priority dates of May 3rd and July 12th, 1984 as the present application and published under EP—A—0161839) which is entitled "A Windshield Defroster Assembly", discloses a windshield defroster having a plate or rudder secured to a defroster duct to control the flow of heated air. In another embodiment the plate or rudder is also secured to a screen which is attached to the defroster duct.

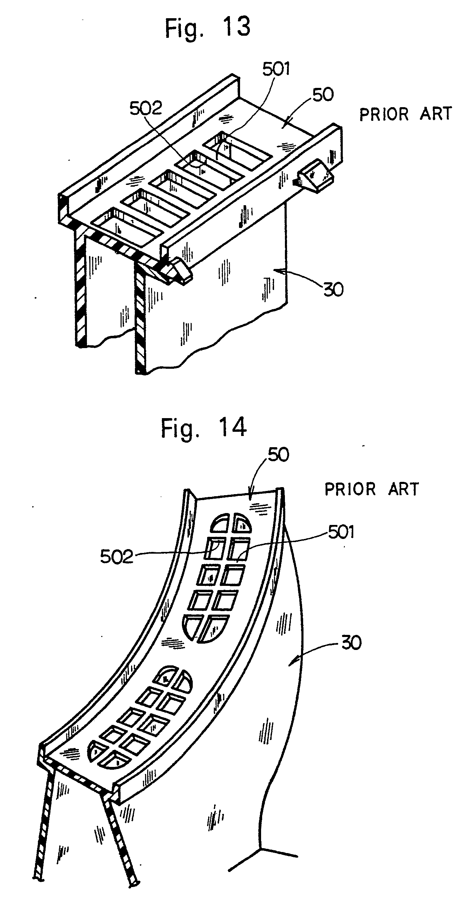

Figs. 13 and 14 show a prior art approach disclosed in Japanese Utility Model Applications Laid-open No. Showa JP—U—51/82236 which represents the preamble of Claim 1. As illustrated in Figs. 13 and 14, a windshield defroster includes a duct 30 and a screen 50 having a plurality of openings 502 and a plurality of bars 501. The screen 50 is disposed on one end of the duct 30, and the screen 50 is integrally and rigidly formed with duct 30.

However, in fact, it is very difficult to form the defroster duct 30 which has the integral and rigid screen 50. Therefore, generally, the screen 50 is separated from the defroster duct 30. Accordingly, the screen 50 which prevents an object from dropping into the duct 30, must be fixed to the duct 30 prior to the windshield defroster being installed into the dashboard of the vehicle. Further, screen 50 covers the entire outlet area of the duct 30, so that screen 50 must be large and heavy. Therefore, even if it is possible to form the defroster duct 30 having the integral, rigid and entirely covered screen 50, this prior art approach increases the material and labour requirements during installation of the duct 30 under the dashboard 20.

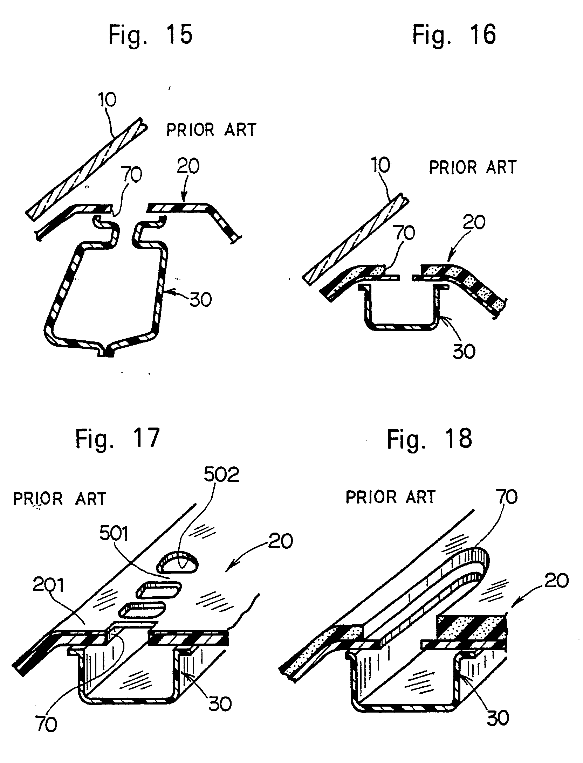

Figs. 15 through Fig. 20 show other prior art approaches. Windshield defrosters shown in Figs. 15, 16 and 18 do not utilize a screen for preventing an object from dropping into the defroster duct 30.

The windshield defroster shown in Fig. 17 includes a plurality of openings 502 and a plurality of bars 501 provided in the top surface 201 of dashboard 20. While the windshield defroster shown in Fig. 17 can prevent an object from dropping into the defroster duct 30, it is very difficult to align the openings 502 and bars 501 within the top surface 201 of dashboard 20 with the defroster outlet 70 in the dashboard 20.

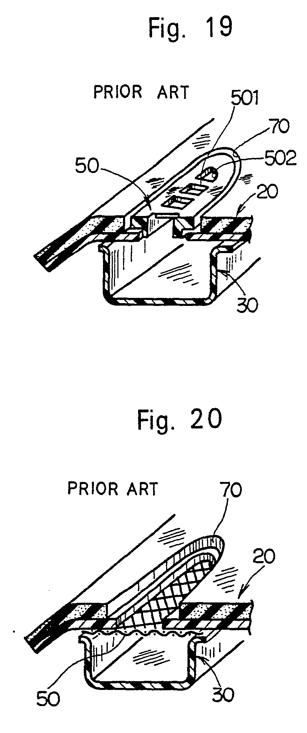

The windshield defroster shown in Fig. 19 has a separate screen 50 which is placed within the defroster outlet 70 of the dashboard 20. The screen 50 includes a plurality of bars 501 and a plurality of openings 502. Furthermore, the windshield defroster shown in Fig. 20 has a separate net-type screen 50. Both of these windshield defrosters include a screen 50 which is separated from the dashboard 20 and duct 30, so that each windshield defroster consists of many components and it is therefore necessary for the installer to assemble many components to the dashboard 20, before the duct 30 is installed under the dashboard 20.

The present invention has been developed to overcome the disadvantages described above. One object of the present invention is to provide a windshield defroster which prevent an object from dropping into a duct through a defroster outlet. Another object is to provide a windshield defroster duct which requires very little material and therefore lightens the weight of the vehicle.

Another object is to provide of a windshield defroster in which it is easy to install a screen in the windshield defroster duct without spening much time or labour.

In order to accomplish the above-described objects, the invention provides a windshield defroster having the characterizing features of Claim 1.

Each screen has a free edge or a second edge which is positioned within the outlet which is defined within the upper peripheral edge of the duct. Since most of the outlet of the duct is not covered by the screen, the duct does not require a lot of excess materials and therefore the duct is lighter thereby reducing the weight of the vehicle.

The duct may have a first projection which extends horizontally from the upper peripheral edge, and the screen has a lower surface which is in contact with the horizontal surface of the first projection of the duct. Furthermore, the hinge, described above, connects a front edge of the first projection to one edge of the screen. The screen is supported by the first projection of the duct and the hinge and the screen extend horizontally without any additional support for the free edge of the screen. Thus, it is not neccessary for the installer to fix the screen on the upper peripheral edge of the duct, and it is only necessary for the installer to bend back the screen on the upper peripheral edge of the duct along the hinge, before the duct is installed under the dashboard.

The screen may include a protrusion on the lower surface thereof, and the upper peripheral edge of the duct has a recess. A pair of blocks are raised from the bottom surface of the recess. The protrusion is inserted into the recess and the protrusion is therefore in frictional contact with the pair of blocks, so that the screen cannot rotate about the hinge, and the screen does not make any noise on the upper peripheral edge of the duct or the bottom surface of the dashboard. Furthermore, it is easy to install the duct under the dashboard, because it is not necessary for the installer to concern himself with the screen.

It is noted that instead of a signal screen, a plurality of screens could be integrated into the duct. In this case, each screen would have an edge which is connected to the upper peripheral edge of the duct by a hinge.

Also, it is clear that a plurality of defroster outlets, with their respective defroster ducts and screens, could be positioned across the dashboard of a vehicle.

Additional objects and novel features of this invention will become more apparent from the description which follows taken in conjunction with the accompanying drawings, wherein like reference numerals denote like elements, and in which:

Fig. 1 is a perspective view showing a windshield defroster according to the present invention;

Fig. 2 is an enlarged cross-sectional view of the windshield defroster of a first embodiment taken along the line II—II in Fig. 1;

Fig. 3 is an enlarged partial perspective view showing the arrangement of components around the defroster outlet of the first embodiment;

Fig. 4 is a partial perspective view showing a duct of a windshield defroster of a second embodiment;

Fig. 5 is an enlarged partial perspective view showing a screen of the duct shown in Fig. 4;

Fig. 6 is an enlarged partial cross-sectional view of the windshield defroster taken along the line VI—VI in Fig. 5, wherein the screen is bent back on the upper peripheral edge of a duct;

Fig. 7 is an enlarged partial cross-sectional view of the windshield defroster taken along the line VII—VII in Fig 5, wherein the screen is bent back on the upper peripheral edge of the duct;

Fig. 8 is an enlarged partial cross-sectional view of the windshield defroster taken along the line VIII—VIII in Fig. 6;

Fig. 9 is an enlarged partial cross-sectional view of a windshield defroster of a third embodiment taken along the line VI—VI in Fig. 5, wherein the screen is bent back on the upper peripheral edge of the duct;

Fig. 10 is an enlarged partial perspective view showing a screen of a duct of a windshield defroster of a fourth embodiment;

Fig. 11 is an enlarged partial cross-sectional view of the windshield defroster taken along the line XI—XI in Fig. 10, wherein the screen is bent back on the upper peripheral edge of the duct;

Fig. 12 is an enlarged partial cross-sectional view of the windshield defroster taken along the line XII—XII in Fig. 11;

Fig. 13 is an enlarged perspective view showing the arrangement of components disposed around the screen disclosed in Japanese Utility Model Application Laid-open No. Showa 51-82236;

Fig. 14 is an enlarged perspective view showing the arrangement of components around another screen disclosed in Japanese Utility Model Application Laid-open Showa 51-82236;

Fig. 15 is a cross-sectional view showing components of a third conventional windshield defroster;

Fig. 16 is a cross-sectional view showing components of a fourth conventional windshield defroster;

Fig. 17 is a cross-sectional view showing components of a fifth conventional windshield defroster;

Fig. 18 is a cross-sectional view showing components of a sixth conventional windshield defroster;

Fig. 19 is a cross-sectional view showing components of a seventh conventional windshield defroster; and

Fig. 20 is a cross-sectional view showing components of an eighth conventional windshield defroster.

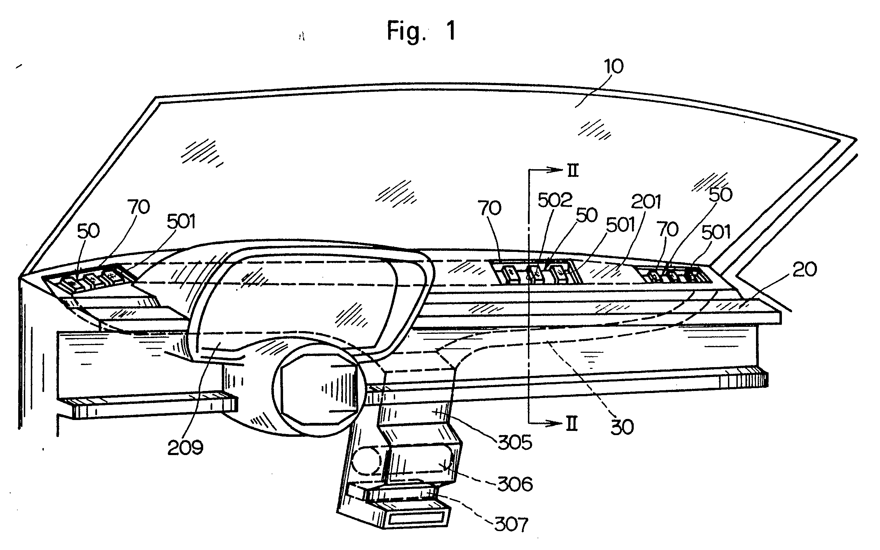

Referring to Fig. 1, a dashboard 20 is positioned at the frontward portion of a passenger compartment of a vehicle and the dashboard 20 extends in the lateral direction between the sides of the vehicles. A top surface 201 of the dashboard 20 is located under a windshield 10, and the top surface 201 of the dashboard 20 extends horizontally. The top surface 201 includes a plurality of defroster outlets 70 and each defroster outlet 70 has a plurality of bars 501 therein. These bars 501 prevent an object from dropping into the defroster outlet 70, and these bars 501 are fixed on a screen 50. The screen 50 includes an opening 502 under the bars 501, and the bars 501 cross over the opening 502. The bars 501 extend in a direction perpendicular to the greatest extent of the dashboard 20, and the bars 501 separate the opening 502 into various sections. The dashboard 20 includes an instrument panel 209 on a rear portion thereof, and a first duct 30 is positioned under the dashboard 20. A second duct 305, a blower 306 and a heater 307 are arranged under the first duct 30.

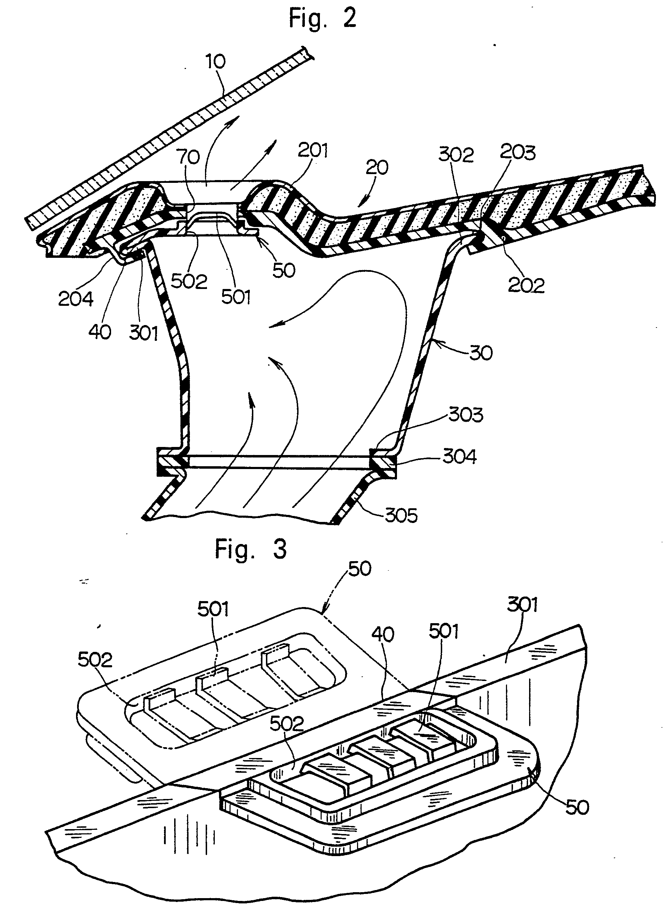

As shown in Figs. 2 and 3, a defroster outlet 70 is placed in the top surface 201 of dasboard 20, in the front portion of the dashboard 20. The dashboard 20 has a recess 203 and a hook 204 on the bottom surface 202 thereof. The recess 203 is located on the central portion of the bottom surface 202 of the dashboard 20 toward the rear of the vehicle, and the recess 203 extends in the lateral direction of the vehicle. Further, the cavity of the recess 203 faces the front of the vehicle. The hook 204 is located in the vicinity of the front edge of the bottom surface 202 of the dashboard 20, and the hook 204 extends in the lateral direction of the vehicle. Furthermore, an end of the hook 204 extends toward the rear of the vehicle, and the defroster outlet 70 is disposed between the recess 203 and the hook 204.

The first duct 30 has an upper edge which forms a first projection 301 and a second projection 302. The first dashboard 301 of the first duct 30 is mounted on the hook 204 of the dashboard 20, and the first projection 301 extends horizontally toward the front of the vehicle. The second projection 302 of the first duct 30 is inserted into the recess 203 of the dashboard 20, and the second projection 302 extends horizontally toward the rear of the vehicle. It is easy to install the first duct 30 on the bottom surface 202 of the dashboard 20, because the first projection 301 of the first duct 30 can be mounted on the hook 204 of the dashboard 20, and then the second projection 302 of the first duct 30 can be inserted into the recess 203 of the dashboard 20. That is, the second projection 302 can be pushed toward the front of the vehicle, since the duct 30 is somewhat elastic, so that the second projection 302 can be inserted into the recess 203. A seal member 304 is positioned beween a lower edge 303 of the first duct 30 and a top edge of a second duct 305. This second duct 305 communicates with the heater 307. The heater 307 is placed under the dashboard 20, and the heater 307 heats the air. The blower 306 is positioned in the vicinity of the heater 307, and the blower 306 distribute the warm air to the defroster outlet 70 through the second duct 305 and the first duct 30.

The first duct 30 includes a screen 50 on the first projection 301 of the first duct 30. A front or first edge of the screen 50 is connected to a front edge of the first projection 301 of the first duct 30 by a hinge 40, and the hinge 40 is integrated with the first duct 30 and the screen 50. Therefore, the screen 50 can rotate about the hinge 40 on the first projection 301 of the first duct 30. The screen 50 has a lower surface which is in contact with the upper surface of the first projection 301 of the duct 30. Accordingly, the screen 50 extends horizontally from the upper peripheral edge of the first duct 30, when the screen 50 is bent back on the first projection 301 of the duct 30. Therefore, the screen 50 is supported horizontally under the bottom surface 202 of the dashboard 20 without any support for the other edge or second edge of the screen 50 which is parallel to the front or first edge of the screen 50. The opening 502 of the screen 50 is congruent with the defroster outlet 70, so that the warm air is distributed to the defroster outlet 70 through the opening 502 of the screen 50. Both ends of the bar 501 are fixed on an inner peripheral edge of the opening 502 of the screen 50, and a plurality of the bars 501 are located in a parallel relationship to each other. An intermediate portion of each bar 501 is placed in the defroster outlet 70. Thus, the screen 50 can prevent an object from dropping into the first duct 30 through the defroster outlet 70.

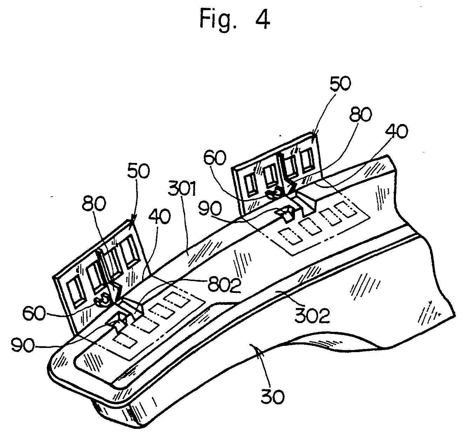

Figs. 4 through 8 show a windshield defroster of a second embodiment. While most of the components in the second embodiment are the same as those previously described above for the first embodiment, the second embodiment has several differences.

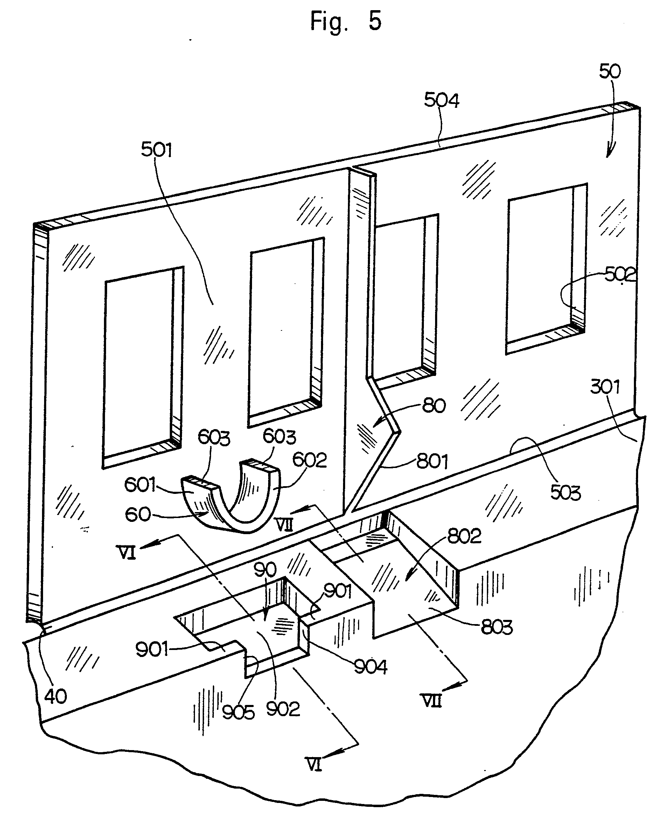

In the second embodiment, as shown in Fig. 4, a first duct 30 includes a plurality of screens 50 on a first projection 301 of the first duct 30, and as shown in Fig. 5, a first edge 503 of each screen 50 is connected to a front edge of the first projection 301 by a hinge 40. The hinge 40 is integrated with the first duct 30 and the screen 50, and the screen 50 includes an opening 502 which is separated by a plurality of bars 501.

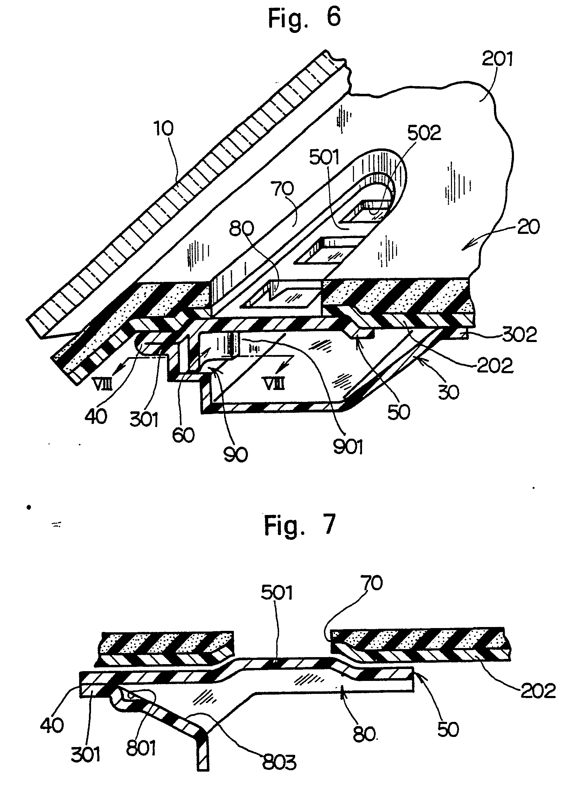

The screen 50 includes a reinforcement 80 at the lateral central portion of the screen 50. The reinforcement 80 extends from the first edge 503 to the second edge 504. The reinforcement 80 is fixed on the lower surface of the screen 50. Also, the reinforcement 80 extends downwardly and has a slanted edge 801 in the vicinity of the first edge 503 of the screen 50. The slanted edge 801 slants to the left as shown in Fig. 7. The first duct 30 includes a first recess 802 in the upper peripheral edge thereof. A slanted bottom 803 is formed in the first recess 802, and the slanted bottom 803 slants to the left as shown in Fig. 7. The first recess 802 is disposed in the vicinty of the reinforcement 80, so that the slanted edge 801 of the reinforcement 80 is in contact with the slanted bottom 803 of the first recess 802, when the screen 50 is positioned back on the first projection 301 of the first duct 30.

Therefore, the screen 50 is supported horizontally by the slanted edge 801 of the reinforcement 80 and the slanted bottom 803 of the first recess 802 without any support for the second edge 504 of the screen 50. However, the second edge 504 may be in contact with the bottom surface 202 of the dashboard 20. Thus, the screen 50 can prevent an object from dropping into the first duct 30 through the defroster outlet 70, even if the object is heavy.

As further shown in Fig. 5, the screen 50 includes a protrusion 60 on the lower surface thereof, and the protrusion 60 is formed in the shape of the letter 'U'. The protrusion 60 has a bottom end 602 and has two free ends 603. Furthermore, the protrusion 60 includes contact surfaces 601 on both sides in the vicinity of the two free ends 603 of protrusion 60.

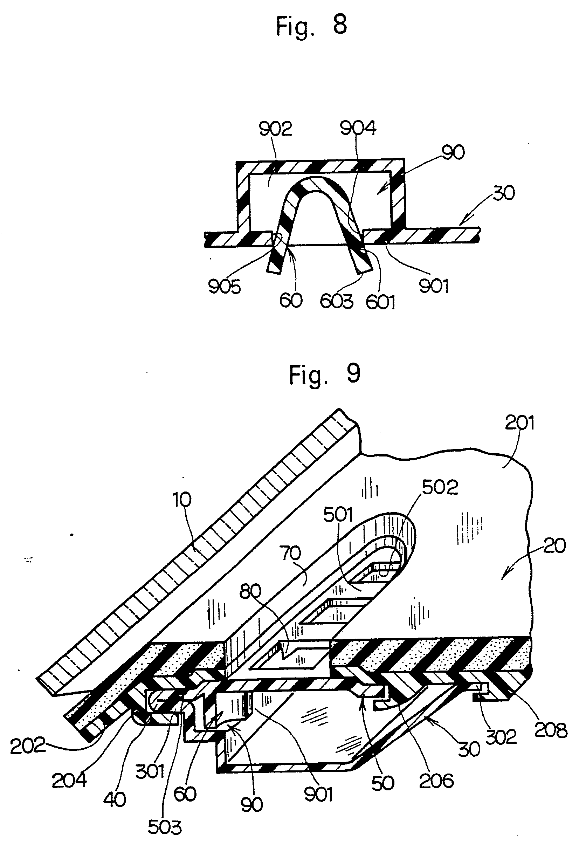

The first duct 30 includes a second recess 90 in the upper peripheral edge thereof, and a horizontal bottom 902 is formed in the second recess 90. Two blocks 901 are raised within the second recess 90, and each block 901 has a contact side. The contact side 904 of block 901 faces the contact side 905 of the other block 901, and as shown in Fig. 8, both contact surfaces 601 of protrusion 60 are in frictional contact with the contact sides 904 and 905 of the respective blocks 901. Thus, the screen 50 is mounted securely on the first projection 301 of the first duct 30 by the protrusion 60 of the screen 50 and the second recess 90 of the first duct 30, and the screen 50 will not rotate about the hinge 40 since the protrusion 60 of the screen 50 has been inserted into the second recess 90. Therefore, it is not necessary for the defroster installer to concern himself with the screen 50 once the screen 50 is positioned back onto the first projection 301 of the first duct 30, and the protrusion 60 is inserted into the second recess 90.

As shown in Fig. 5, the bottom end 602 of the protrusion 60 is in contact with the horizontal bottom 902 of the second recess 90. Therefore, the bottom end 602 of the protrusion 60 and the horizontal bottom 902 of the second recess 90 prevent the screen 50 from bending past an imaginary horizontal plane of the vehicle.

Fig. 9 shows a windshield defroster of a third embodiment. While most of the components in the third embodiment are the same as those previously described for the second embodiment, the third embodiment has several differences.

In the third embodiment, a dashboard 20 includes a first hook 208, a second hook 204, and a third hook 206 on the bottom surface 202 of dashboard 20. The first hook 208 is formed on the central portion of the bottom surface 202, toward the rear of the vehicle, and the first hook 208 extends in the lateral direction of a vehicle. Also, an end of the first hook 208 extends toward the front of the vehicle. The second hook 204 is formed in the vicinity of the front edge of the bottom surface 202 of the dashboard 20, and the second hook 204 extends in the lateral direction of the vehicle. An end of the second hook 204 extends toward the rear of the vehicle. the third hook 206 is formed between the first hook 208 and the second hook 204, and the third hook 206 extends in the lateral direction of the vehicle. Also, an end of the third hook extends toward the front of the vehicle. Between the second hook 204 and the third hook 206, the dashboard 20 has a defroster outlet 70, and a screen 50 is placed under the defroster outlet 70. An first edge 503 of the screen 50 is connected to the front edge of the first projection 301 of the first duct 30, and the first edge 503 of the screen 50 and the front edge of the first projection 301 are mounted within the second hook 204. The second edge 504 of the screen 50 is mounted within the third hook 206, and a second projection 302 of the first duct 30 is mounted on the first hook 208.

Therefore, the first duct 30 and the screen 50 are mounted securely on the bottom surface 202 of the dashboard 20, so that the screen 50 can prevent an object from dropping into the first duct 30 through the defroster outlet 70, even if the object is heavy.

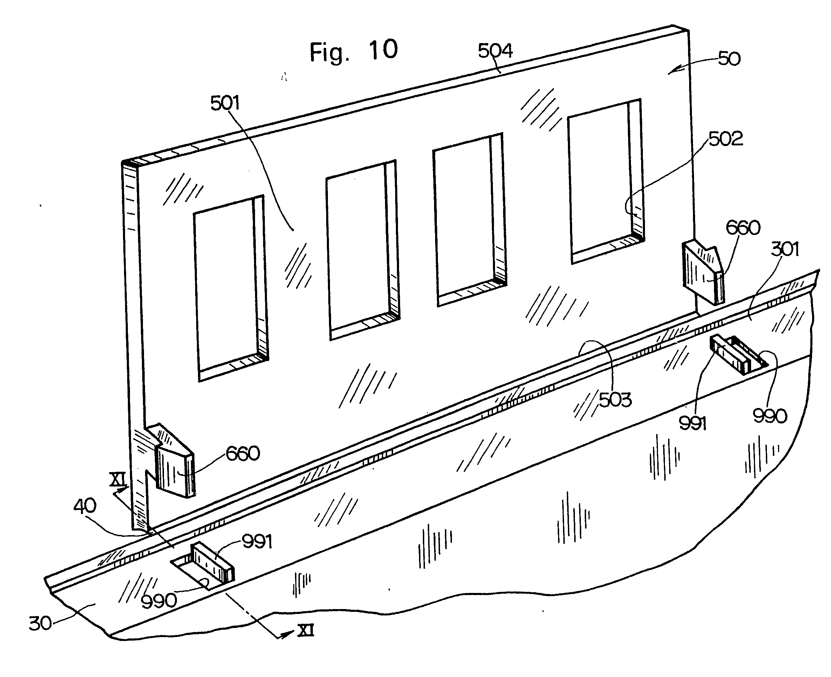

Figs. 10 through 12 show a windshield defroster of a fourth embodiment. While most of components in the fourth embodiment are the same as those previously described above for the second embodiment, the fourth embodiment has several differences.

In the fourth embodiment, as shown in Fig. 10, a screen 50 has a pair of projections 660 on the lower surface thereof, and the projections 660 are wedge-shaped. A first duct 30 includes a pair of holes 990 and a pair of props 991 on the upper peripheral edge of the first duct 30.

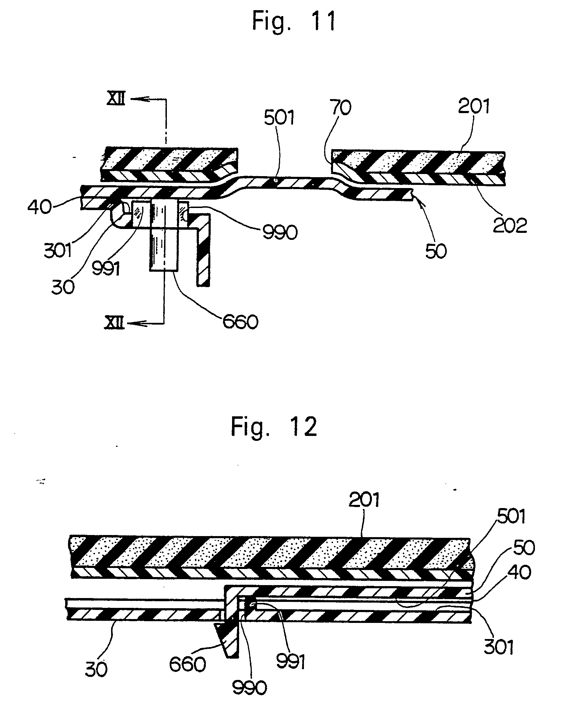

As shown in Fig. 11, each of the pair of the projections 660 is inserted into one of the holes 990, when the screen 50 is bent back onto the first projection 301 of the first duct 30.

As shown in Fig. 12, the lower surface of the screen 50 is supported by the prop 991, and the projection 660 of the screen 50 engages the hole 990 of the first projection 301 of the first duct 30.

Accordingly, the screen 50 is fixed securely on the first projection 301 of the first duct 30.

Therefore, the screen 50 can prevent an object form dropping into the first duct 30 through the defroster outlet 70, even if the object is heavy.

As herein-above described, the windshield defroster of the present invention can prevent an object from dropping into a duct through a defroster outlet, and this advantage can be obtained using less time and labor during the installation of the duct underneath the dashboard.

**Claims**

1. A windshield defroster assembly, comprising a duct (30) which conveys heated air from a heat source (307) to a windshield (10), the duct (30) having an upper peripheral edge defining a port, a screen (50) positioned within the port, the screen (50) having at least one opening (502) and a first edge (503), at least one bar (501) crossing over the at least one opening (502) of the screen (50), the at least one bar (501) having two ends, each end of the at least one bar (501) being fixed to the screen (50), whereby the screen (50) and the at least one bar (501) prevent objects from dropping into the duct (30), characterized in that the screen (50) is smaller than the port of the duct (30), that the screen (50) is swingable about a hinge (40) on the duct (30), that the hinge (40) connects the first edge (503) of the screen (50) to the upper peripheral edge of the duct (30), that the hinge (40) is integral with the screen (50) and the duct (30), and that in an operative position of the screen it extends across a part of said port and registers with a defroster outlet (70) in a dashboard section covering said port.

2. A windshield defroster assembly as claimed in Claim 1, characterized in that a first projection (301) extends horizontally from the upper peripheral edge of the duct (30), and has a front edge, that the screen (50) has a lower surface, and that the hinge (40) is located between the first edge (503) of the screen (50) and the front edge of the first projection (301) of the duct (30), whereby the lower surface of the screen (50) is in contact with the first projection (301) of the duct (30) when the screen (50) is in its operative position, so that the screen (50) is supported horizontally on the first projection (301) of the duct (30).

3. A windshield defroster assembly as claimed in Claim 1 or Claim 2, wherein said at least one bar (501) extends in a direction perpendicular to said first edge (503) of the screen (50), and a reinforcement (80) is fixed on the lower surface of the screen (50), the reinforcement (80) extending parallel to the at least one bar (501).

4. A windshield defroster assembly as claimed in Claim 3, wherein the downwardly extending reinforcement (80) has a slanted edge (801) adjacent said first edge (503) of the screen, and a recess (802) having a slanted bottom surface (803) is formed in the upper edge of the duct (30), and wherein said slanted edge contacts said slanted bottom surface (803) in said operative position of the screen.

5. A windshield defroster assembly as claimed in any of claims 1—4, including a recess (90) formed on the upper peripheral edge of the duct (30), a block (901) projecting from the recess (90), and a protrusion (60) fixed on lower surface of

the screen (50), the protrusion (60) being inserted into the recess (90) and being in frictional contact with the block (901) in the operative position of the screen.

6. A windshield defroster assembly as claimed in Claim 5, including a pair of said blocks (901) spaced apart and having confronting contact surface, said protrusion (60) being U-shaped to engage between said pair of blocks (901) in the operative position of the screen, with the outside surfaces of the limbs of the U-shaped protrusion (60) being in frictional contact with the contact surfaces of the blocks, respectively.

7. A windshield defroster assembly as claimed in any of Claims 1—6, wherein said dashboard section has on its bottom surface (202) a first hook (208), and a second hook (204) for receiving a projection (302) at the rear edge of the upper periphery of the duct (30), and said hinge (40) respectively to locate said dashboard section on the duct.

8. A windshield defroster assembly as claimed in Claim 7 including a third hook (206) on the bottom surface (202) of said dashboard section for receiving the free edge of the screen (50) remote from the hinge (40).

9. A windshield defroster assembly as claimed in Claim 1 or Claim 2, comprising an aperture (990) formed on the upper peripheral edge (301) of the duct (30), a block (991) projecting from the said upper peripheral edge (301), and a protrusion (660) fixed on the lower surface of the screen (50), the protrustion (660) being inserted into the aperture (990) and the block (991) being in contact with the lower surface of the screen (50), in said operative condition of the screen.

10. A windshield defroster assembly as claimed in Claim 9, wherein said protrusion (660) is in the form of a wedge-shaped detent which is a snap fit in said aperture (990) in said operative position of the screen.

**Patentansprüche**

1. Vorrichtung zum Enteisen einer Windschutzscheibe, enthaltend einen Kanal (30), der erwärmte Luft von einer Wärmequelle (307) zu einer Windschutzscheibe (10) transportiert, wobei der Kanal (30) eine einen Ausgang begrenzende obere Umfangskante und einen innerhalb des Ausgangs placierten Schirm (50) aufweist, wobei der Schirm (50) wenigstens eine Öffnung (502) und eine erste Kante (503) sowie wenigstens eine Traverse (501) hat, die wenigstens eine Öffnung (502) des Schirms (50) überquert, wobei die wenigstens eine Traverse (501) zwei Enden hat, wobei jedes Ende der wenigstens einen Traverse (501) an dem Schirm (50) befestigt ist, wodurch der Schirm (50) und die wenigstens eine Traverse (501) verhindern, daß Gegenstände in den Kanal (30) fallen, dadurch gekennzeichnet, daß der Schirm (50) kleiner ist als der Ausgang des Kanals (30), daß der Schirm (50) um ein Scharnier (40) auf dem Kanal (30) schwenkbar ist, daß das Scharnier (40) die ersten Kante (503) des Schirmes (50) mit der oberen Umfangskante des Kanals (30) verbindet, daß das Scharnier (40) in einem Stück mit dem Schirm (50) und dem Kanal (30) ausgebildet ist und daß es sich bei einer Betriebsposition des Schirms über einen Teil des genannten Ausgangs erstreckt und in einen Enteiseraustritt (70) in einem Abschnitt des den genannten Ausgang überdeckenden Armaturenbretts übergeht.

2. Vorrichtung zum Enteisen einer Windschutzscheibe nach Anspruch 1, dadurch gekennzeichnet, daß eine erste Verlängerung (301) sich horizontal von der oberen Umfangskante des Kanals (30) erstreckt und eine Vorderkante hat, daß der Schirm (50) eine untere Fläche hat und daß das Scharnier (40) sich zwischen der ersten Kante (503) des Schirms (50) und der Vorderkante der ersten Verlängerung (301) des Kanals (30) befindet, wodurch die untere Fläche des Schirms (50) sich mit der ersten Verlängerung (301) des Kanals (30) in Kontakt befindet, wenn der Schirm (50) in seiner Betriebsposition ist, so daß der Schirm (50) horizontal von der ersten Verlängerung (301) des Kanals (30) getragen wird.

3. Vorrichtung zum Enteisen einer Windschutzscheibe nach Anspruch 1 oder Anspruch 2, worin die wenigstens eine Traverse (501) sich in einer senkrechten Richtung zur genannten ersten Kante (503) des Schirms (50) erstreckt und auf der unteren Fläche des Schirms (50) eine Bewehrung (80) befestigt ist, wobei die Bewehrung (80) sich parallel zu der wenigstens einen Traverse (501) erstreckt.

4. Vorrichtung zum Enteisen einer Windschutzscheibe nach Anspruch 3, worin die sich nach unten erstreckende Bewehrung (80) neben der genannten ersten Kante (503) des Schirms eine schräge Kante (801) aufweist und eine Ausnehmung (802) mit einer schragen Bodenfläche (803) in der oberen Kante des Kanals (30) ausgebildet ist, und worin die genannte schräge Kante die genannte schräge Bodenfläche (803) in der besagten Betriebsposition des Schirms berührt.

5. Vorrichtung zum Enteisen einer Windschutzscheibe nach einem der Ansprüche 1—4, enthaltend eine auf der oberen Umfangskante des Kanals (30) ausgebildete Ausnehmung (90), einen von der Ausnehmung (90) hervorstehenden Block (901) und einen auf der unteren Fläche des Schirms (50) befestigten Vorsprung (60), der in die Ausnehmung (90) eingelassen ist und in der Betriebsposition des Schirms Reibkontakt mit dem Block (901) hat.

6. Vorrichtung zum Enteisen einer Windschutzscheibe nach Anupruch 5, enthaltend ein in einem Abstand angeordnetes Paar der genannten Blöcke (901) mit sich gegenüberstehenden Kontaktflächen, wobei der genannte Vorsprung (60) U-förmig ist, um in der Betriebsposition des Schirms, zwischen dem genannten Paar Blöcke (901) einzugreifen, wobei die Außenflächen der Schenkel des U-förmigen Vorsprungs (60) jeweils mit den Kontaktflächen der Blöcke Reibkontakt haben.

7. Vorrichtung zum Enteisen einer Windschutzscheibe nach einem der Ansprüche 1—6, worin der genannte Abschnitt des Armaturenbretts einen ersten Haken (208) an seiner Bodenfläche (202) und einen zweiten Haken (204) zur Aufnahme einer Verlängerung (302) an der hinteren Kante des oberen Umfangs des Kanals (30) und das genannte Scharnier (40) jeweils zum Positionieren des genannten Abschnitts des Armaturenbretts auf dem Kanal aufweist.

8. Vorrichtung zum Enteisen einer Windschutzscheibe nach Anspruch 7, enthaltend einen dritten Haken (206) auf der Bodenfläche (202) des genannten Abschnitts des Armaturenbretts zur Aufnahme der von dem Scharnier (40) abgelegenen freien Kante des Schirms (50).

9. Vorrichtung zum Enteisen einer Windschutzscheibe nach Anspruch 1 oder Anspruch 2, umfassend eine auf der oberen Umfangskante (301) des Kanals (30) ausgebildete Bohrung (990), einen von der genannten oberen Umfangskante (301) vorstehenden Block (991) und einen auf der unteren Fläche des Schirms (50) befestigten Vorsprung (660), wobei der Vorsprung (660) in die Bohrung (990) eingelassen ist und der Block (991) sich bei Betriebsposition des Schirms in Kontakte mit der unteren Fläche des Schirms (50) befindet.

10. Vorrichtung zum Enteisen einer Windschutzscheibe nach Anspruch 9, worin der genannte Vorsprung (660) als keilförmige Klinke ausgebildet ist, die bei Betriebsposition des Schirms einrastend in der genannten Bohrung (990) eingepaßt ist.

**Revendications**

1. Un ensemble de dégivrage de pare-brise, comprenant un conduit (30) qui transporte de l'air chaud à partir d'une source de chaleur 307) vers un pare-brise (10), le conduit (30) possédant un bord périphérique supérieur définissant un orifice, un écran (50) positionné à l'intérieur de l'orifice, l'écran (50) possédant au moins une ouverture (502) et un premier bord (503), au moins une barre (501) passant au-dessus de l'ouverture au moins unique (502) de l'écran (50), la barre au moins unique (501) possédant deux extrémités, chaque extrémité de cette barre au moins unique (501) étant fixée à l'écran (50), de sorte que l'écran (50) et la barre au moins unique (501) empêchent les objets de tomber à l'intérieur du conduit (30), caractérisé en ce que l'écran (50) est plus petit que l'orifice du conduit (30), en ce que l'écran (50) peut pivoter autour d'une charnière (40) sur le conduit (30), en ce que la charnière (40) relie le premier bord (503) de l'écran (50) au bord périphérique supérieur du conduit (30), en ce que la charnière (40) est d'un seul tenant avec l'écran (50) et le conduit (30) et, en ce que dans la position de fonctionnement de l'écran, elle s'étend à travers une partie dudit orifice et vient s'insérer dans une ouverture de dégivrage (70) se trouvant dans une section du tableau de bord couvrant ledit orifice.

2. Un ensemble de dégivrage de pare-brise selon la revendication 1, caractérisé en ce qu'une première partie en saillie (301) s'étend horizontalement à partir du bord périphérique supérieur du conduit (30) et possède un bord avant, en ce que l'ecran (50) possède une surface inférieure, et en ce que la charnière (40) est située entre le premier bord (503) de l'écran (50) et le bord avant de la première partie en saillie (301) du conduit (30), de sorte que la partie inférieure de l'écran (50) soit en contact avec la première partie en saillie (301) du conduit (30) lorsque l'écran (50) est dans sa position de fonctionnement, et que l'écran (50) soit supporté horizontalement par la première partie en saillie (301) du conduit (30).

3. Un ensemble de dégivrage de pare-brise selon la revendication 1 ou la revendication 2, dans lequel ladite barre au moins unique (501) s'étend dans une direction perpendiculaire audit premier bord (503) de l'écran (50) et en ce qu'une nervure (80) est fixée sur la surface inférieure de l'écran (50), cette nervure (80) étant parallèle à la barre au moins unique (501).

4. Un ensemble de dégivrage de pare-brise selon la revendication 3, caractérisé en ce que la nervure (80) s'étendant vers le bas possède un bord incliné (801) adjacent audit premier bord (503) de l'écran, et en ce qu'un évidement (802) présentant une surface de fond inclinée (803) est formé dans le bord supérieur du conduit (30), et en ce que dans ladite position de fonctionnement de l'écran ledit bord incliné est en contact avec ladite surface de fond inclinée (803).

5. Un ensemble de dégivrage de pare-brise selon l'une quelconque des revendications 1 à 4, comprenant un évidement (90) formé sur le bord périphérique supérieur du conduit (30), un block (901) en avancée par rapport à l'évidement (90), et une protubérance (60) fixée sur la surface inférieure de l'écran (50), cette protubérance (60) étant disposée dans l'évidement (90) et étant dans la position de fonctionnement de l'écran en contact à friction avec le bloc (901).

6. Un ensemble de dégivrage de pare-brise selon la revendication 5, comprenant une paire desdits blocs (901) distants l'un de l'autre et possédant une surface de contact se faisant face, ladite protrubérance (60) étant en forme d'U pour s'engager, dans la position de fonctionnement de l'écran, entre ladite paire de blocs (901), les surfaces extérieures des branches de la protubérance en forme d'U (60) étant en contact à friction avec les surfaces de contact des blocs respectives.

7. Un ensemble de dègivrage de pare-brise selon l'une quelconque des revendications 1 à 6, dans lequel ladite section de tableau de bord possède, sur sa surface de fond (202), und premier crochet (208), et un second crochet (204) pour recevoir sur le bord arrière de la périphérie supérieure du conduit (30) et ladite charnière (40) une saillie (302) pour loger ladite section de tableau de bord sur le conduit.

8. Un ensemble de dégivrage de pare-brise selon la revendication 7, comprenant un troisième crochet (206) sur la surface de fond (202) de ladite section de tableau de bord pour recevoir le bord libre de l'écran (50) éloigné de la charnière (40).

9. Un ensemble de dégivrage de pare-brise, selon la revendication 1 ou la revendication 2, comprenant une ouverture (990) formée sur le bord périphérique supérieur (301) du conduit (30), un bloc (991) formant avancée par rapport audit bord périphérique supérieur (301), et une protubérance (660) fixée sur la surface inférieure de l'écran (50), cette protubérance (660) étant insérée dans l'ouverture (990) et le bloc (991) dans ladite condition de fonctionnement de l'écran étant en contact avec la surface inférieure de l'écran (50).

10. Un ensemble de dégivrage de pare-brise selon la revendication 9, dans lequel ladite protubérance (660) a la forme d'un crochet en forme de coin qui dans ladite position de fonctionnement de l'écran vient s'encliqueter dans ladite ouverture (990).

Fig. 1

Fig. 2

Fig. 3

2

# Fig. 4

## Fig. 5

## Fig. 6

## Fig. 7

Fig. 8

Fig. 9

Fig. 10

## Fig. 11

## Fig. 12

## Fig. 13

PRIOR ART

## Fig. 14

PRIOR ART

# Fig. 15

10

PRIOR ART

70  20

30

# Fig. 16

10  PRIOR ART

70  20

30

# Fig. 17

PRIOR ART

502

501

20

201

70  30

# Fig. 18

PRIOR ART  70

20

30

# Fig. 19

PRIOR ART

# Fig. 20

PRIOR ART